# FASCICULE DE BREVET EUROPEEN

(11) **EP 2 591 267 B1**
(45) Date de publication et mention de la délivrance du brevet: **18.03.2015**
(21) Numéro de dépôt: 11727230.2
(22) Date de dépôt: 19.05.2011
(51) Int. Cl.: B67C 3/26, F16L 37/413, F16L 37/096, F16K 1/30

(54) **PRISE DE CONDITIONNEMENT, SON UTILISATION ET PROCÉDÉ DE REMPLISSAGE.**
FÜLLAUSLAUF, VERWENDUNG UND FÜLLVERFAHREN
FILLING OUTLET, ITS USE AND FILLING METHOD

(30) Priorité: 09.07.2010 FR 1055606
(43) Date de publication de la demande: 15.05.2013
(60) Demande divisionnaire: 14170784.4
(73) Titulaire: L'Air Liquide Société Anonyme pour l'Etude et l'Exploitation des Procédés Georges Claude, 75007 Paris (FR)
(72) Inventeur: FRENAL, Antoine, F-95460 Ezanville (FR); DECK, Philippe, F-93100 Montreuil (FR); MANSCOURT, Cyril, 92170 Vanves (FR); PISOT, Philippe, 38140 Apprieu (FR)
(74) Mandataire: De Cuenca, Emmanuel Jaime
(86) Numéro de dépôt international: PCT/FR2011/051132
(87) Numéro de publication internationale: WO 2012/004483

(56) Documents cités:
- WO-A1-2008/059490
- FR-A1- 2 063 957
- US-B1- 6 343 630

## Description

La présente invention concerne une prise de conditionnement de gaz sous pression, un ensemble comprenant un raccord et une prise de conditionnement, leur utilisation et un procédé de remplissage correspondant.

L'invention concerne plus particulièrement une prise de conditionnement prévue pour coopérer avec un raccord de remplissage d'un robinet de récipient de fluide sous pression, comprenant au moins une griffe s'étendant selon une direction longitudinale autour d'un axe longitudinal, l'espace central situé entre la ou les griffes et l'axe longitudinal formant un logement destiné à accueillir un raccord de remplissage de forme générale cylindrique.

L'invention concerne notamment le remplissage des bouteilles de gaz à haute pression (par exemple entre 200 et 700 bar).

La présente invention concerne notamment un mécanisme permettant de connecter rapidement une prise (ou pince) de conditionnement sur un raccord d'une bouteille de gaz afin de permettre le remplissage de ladite bouteille.

De tels dispositifs comportent généralement deux fonctions :
- une fonction de verrouillage (c'est-à-dire d'accrochage mécanique) de la prise sur le raccord et
- un détrompeur (c'est-à-dire un système mâle/femelle qui ne permet de connecter qu'une prise déterminée un raccord de type déterminé pour éviter des connexions dangereuses).

Pour assurer la fonction de « détrompage », la plupart des fabricants utilisent des ergots sur le profil du raccord de remplissage.

Cependant, ces systèmes de connexion rendent plus difficiles les opérations de connexion, en particulier les opérations de connexion automatisées.

Selon un autre système connu, un système à mâchoires d'une prise de remplissage vient s'accrocher sur les filets d'un raccord fileté pour permettre ainsi le verrouillage de l'ensemble. L'inconvénient d'un tel système concerne essentiellement la sécurité car l'opérateur n'a pas la possibilité de bien vérifier la qualité du verrouillage. De plus, les filets du raccord fileté ont tendance à s'abîmer ce qui affecte la qualité de la connexion mécanique.

Le document FR2570469 A décrit une prise de remplissage comprenant des taquets articulés qui viennent enserrer sélectivement le corps du robinet de façon à plaquer de façon étanche une arrivée de gaz de la prise contre l'entrée de gaz du robinet.

Ce type d'accrochage et d'étanchéité est cependant difficile à mettre en oeuvre par les opérateurs et n'offre pas des garanties de sécurité suffisantes notamment pour un remplissage avec des cadences industrielles. Le positionnement de la prise de remplissage par rapport au robinet est par ailleurs malaisé et difficilement automatisable.

Les documents US 6,343,630 et DE 92 176 29 décrivent des systèmes de délivrance de fluide à haute pression comprenant des mâchoires d'accrochage qui sont mobiles longitudinalement par rapport à un manchon extérieur fixe.

Les mâchoires ainsi qu'un piston interne sont déplaçables longitudinalement sous l'action d'un raccord introduit dans le système de délivrance.

Le document EP 1 447 574 A1 décrit un système de liaison mécanique de deux axes.

Le document FR 2063957 A décrit une prise conforme au préambule de la revendication 1.

Un but de la présente invention est de pallier tout ou partie des inconvénients de l'art antérieur relevés ci-dessus.

A cette fin, la prise de conditionnement selon l'invention, par ailleurs conforme à la définition générique qu'en donne le préambule ci-dessus, est essentiellement caractérisée en ce que la face interne de la au moins une griffe située en vis-à-vis de l'espace central est de forme générale plane et munie de reliefs et/ou de creux de dimensions déterminées, les reliefs et/ou creux étant espacés relativement les uns des autres de façon déterminée pour s'emboîter dans des rainures et/ou reliefs conjugués formés sur la face extérieure d'un raccord de remplissage, la au moins une griffe étant mobile transversalement par rapport à l'axe longitudinal entre une position dite « écartée » pour permettre l'introduction d'un raccord dans l'espace central et une position dite « rapprochée » pour permettre l'emboîtement de la face interne des griffes sur la face extérieure d'un raccord, ladite prise comprenant un organe de verrouillage mobile entre une position active bloquant les griffes en position rapprochée et une position inactive autorisant le déplacement des griffes vers la position écartée.

L'invention assure, via un mécanisme simple et peu coûteux, les fonctions :
- d'accrochage pour assurer un bon verrouillage d'une prise de conditionnement sur un raccord et
- de détrompage pour assurer que la prise de conditionnement s'adapte au raccord qui lui est conjugué (ou inversement).

Par ailleurs, des modes de réalisation de l'invention peuvent comporter l'une ou plusieurs des caractéristiques suivantes :
- la prise comprend plusieurs griffes espacées les unes des autres autour de l'axe longitudinal,
- la prise comporte au moins une griffe mobile entre les positions écartée et rapprochée via un mouvement de pivotement autour d'un axe d'articulation,
- l'organe de verrouillage comprend un manchon de forme général tubulaire disposé autour de la au moins une griffe,
- le manchon est mobile en translation selon une direction parallèle à l'axe longitudinal,
- lorsque la au moins une griffe est en position écartée, une butée empêche le passage de l'organe de verrouillage de la position inactive vers la position active, et en ce que, lorsque la au moins une griffe est en position rapprochée, le passage de l'organe de verrouillage de la position inactive vers la position active n'est pas entravé par la butée,
- la prise comprend un organe mobile d'écartement sélectif des griffes, ledit organe d'écartement étant mobile entre une position dite « de travail » empêchant le déplacement des griffes de la position écartée vers la position rapprochée et une position dite « de repos » autorisant le déplacement des griffes de la position écartée vers la position rapprochée,
- l'organe d'écartement est sollicité par défaut vers sa position de travail par un organe de rappel,
- l'organe d'écartement débouche dans l'espace central situé entre la au moins une griffe et l'axe longitudinal, l'organe d'écartement étant déplaçable de sa position de travail vers sa position de repos par actionnement mécanique direct ou indirect du raccord de remplissage lorsque ce dernier pénètre dans l'espace central de la prise de conditionnement,
- les griffes sont mobiles en translation entre les positions écartée et rapprochée,
- la prise comprend au moins une griffe mobile entre les positions écartée et rapprochée via un mouvement de flexion et/ou de pivotement autour d'un axe d'articulation fixe relativement à la base située à une extrémité dite « amont » de la griffe, c'est-à-dire que l'axe d'articulation est situé à une extrémité de la griffe qui est du côté amont de la prise dans le sens d'écoulement du gaz de remplissage dans la prise,
- la prise de conditionnement comprend trois ou quatre griffes disposées autour de l'axe longitudinal,
- la butée empêchant sélectivement le passage de l'organe de verrouillage de la position inactive vers la position active comprend au moins un épaulement formé sur au moins une griffe,
- l'organe d'écartement comprend une surface formant une butée sélective empêchant le rapprochement de la au moins une griffe en fonction de la position de l'organe d'écartement par rapport à la au moins une griffe,
- l'organe d'écartement comporte un corps de forme générale tubulaire dont la surface extérieure comporte un profile en rampe destinée à accueillir et guider la au moins une griffe, pour définir l'écartement de ladite au moins une griffe par rapport à l'axe longitudinal,
- l'organe d'écartement est mobile en translation selon une direction parallèle à l'axe longitudinal,
- le pousse-clapet de la prise de remplissage est mobile en translation indépendamment de la position de la au moins une griffe et de la position de l'organe de verrouillage,
- l'organe de rappel sollicitant l'organe d'écartement comprend au moins parmi : un ressort de compression, un ressort de traction,
- la prise comporte une pièce mobile sensible à la pression interne dans la prise de conditionnement, pour verrouiller sélectivement l'organe de verrouillage dans la position active lorsque la prise de conditionnement est sous pression, c'est-à-dire lorsque la prise distribue du fluide sous pression,
- le raccord est orienté verticalement, c'est-à-dire que la prise de remplissage vient se raccorder mécaniquement verticalement de haut en bas sur ledit raccord,

L'invention concerne également un ensemble comprenant un raccord de remplissage et une prise de conditionnement, la prise de conditionnement étant conforme à l'une quelconque des caractéristiques ci-dessus ou ci-dessous, le raccord de remplissage comprenant un corps de forme générale cylindrique s'étendant selon un axe longitudinal et dont la surface extérieure comprend des rainures et/ou reliefs transversaux ayant des dimensions déterminées selon une direction perpendiculaire à l'axe longitudinal du raccord, les rainures et/ou reliefs étant espacés de façon déterminée selon la direction longitudinale du raccord, les reliefs et/ou creux de la au moins une griffe étant conjuguées desdits rainures et/ou reliefs du raccord pour permettre un accrochage sélectif des griffes sur le corps du raccord.

Selon d'autres particularités possibles :
- au moins une partie des rainures et/ou reliefs transversaux sont formés sur la circonférence du corps du raccord pour permettre un accrochage de la au moins une griffe sur le corps du raccord quelle que soit la position angulaire de la au moins une griffe autour de l'axe longitudinal du raccord,

Ainsi, la fonction de détrompage (c'est-à-dire la bonne correspondance géométrique entre la prise de remplissage et le raccord) ne nécessite aucun indexage angulaire d'une partie par rapport autour de l'axe longitudinal. Ceci permet de faciliter la connexion, en particulier une éventuelle connexion automatique de la prise sur le raccord.

Selon d'autres particularités possibles :
- la prise de remplissage se connecte mécaniquement via la ou les griffes uniquement sur un raccord de remplissage à l'exclusion d'une attache mécanique sur le corps d'un robinet portant le raccord,
- le raccord de remplissage comprend un corps définissant un circuit interne de remplissage entre une extrémité amont de connexion à la prise de conditionnement et une extrémité aval de liaison avec un récipient, le raccord comprenant un clapet d'isolement mobile relativement à un siège entre une position amont de fermeture du circuit et une position aval d'ouverture du circuit, ledit clapet d'isolement étant sollicité vers sa position amont par un organe de rappel, le raccord comprenant en outre un clapet pare-poussière disposé en amont du clapet d'isolement, ledit clapet pare-poussière étant mobile relativement au corps entre une position amont de fermeture de l'extrémité amont du circuit et une position aval d'ouverture de l'extrémité amont circuit, ledit clapet pare-poussière étant sollicité vers sa position amont par un organe de rappel.
- le clapet pare-poussière porte un filtre interposé sur le trajet d'au moins une partie du fluide qui transite entre l'amont et l'aval du circuit, le filtre étant mobile avec le clapet pare-poussière,
- le clapet pare-poussière comporte une extrémité aval et, lorsque ledit clapet pare-poussière est dans une position aval déterminée dite « de contact » ouvrant l'extrémité amont du circuit, cette extrémité aval du clapet pare-poussière vient pousser une extrémité amont du clapet d'isolement mobile pour déplacer le clapet d'isolement vers sa position aval d'ouverture du circuit.

L'invention concerne également une utilisation d'une prise de conditionnement selon l'une quelconque des caractéristiques ci-dessus ou ci-dessous ou d'un ensemble selon l'une quelconque des caractéristiques ci-dessus ou ci-dessous pour le remplissage d'un récipient de fluide sous pression, notamment une bouteille de gaz sous pression.

L'invention concerne également un procédé de remplissage en fluide sous pression d'un récipient comprenant un robinet muni d'un raccord de remplissage ayant un corps de forme générale cylindrique s'étendant selon un axe longitudinal et dont la surface extérieure comprend des rainures et/ou reliefs transversaux ayant des dimensions déterminées selon une direction perpendiculaire à l'axe longitudinal du raccord, le raccord comprenant un moins un clapet interne, le procédé comportant une étape de connexion mécanique, sur le raccord, d'une prise de conditionnement selon l'une quelconque des caractéristiques ci-dessus ou ci-dessous, la face interne de la au moins une griffe de la prise de conditionnement étant conjuguée de la forme extérieur du raccord.

Selon d'autres particularités possibles :
- le procédé de remplissage comporte une étape de verrouillage de l'organe de verrouillage dans la position active lorsque la prise de conditionnement est sous pression et/ou lorsqu'au moins un clapet du raccord de remplissage est ouvert,
- le procédé comporte une étape d'ouverture sélective du au moins un clapet du raccord de remplissage, l'étape d'ouverture sélective du au moins un clapet est réalisée indépendamment de l'étape de connexion mécanique de la prise de conditionnement sur le raccord, en particulier l'étape d'ouverture du au moins un clapet est réalisée après l'étape de connexion mécanique de la prise de conditionnement sur le raccord,

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective et partielle illustrant un détail d'une prise de remplissage se connectant à un raccord selon un exemple de réalisation possible de l'invention,
- les figures 2 et 3 représentent des vues en coupe longitudinale et partielles illustrant deux états successifs dans le processus d'accrochage d'une prise de remplissage sur un raccord selon un exemple de réalisation possible de l'invention,
- la figure 4 représente une vue en coupe illustrant une prise de remplissage selon un exemple de réalisation possible de l'invention,
- la figure 5 représente la prise de remplissage de la figure 4 connectée à un raccord de remplissage dans laquelle la prise de remplissage commence un processus d'ouverture des clapets internes du raccord de remplissage,
- la figure 6 représente schématiquement la prise de remplissage de la figure 5 montée sur un récipient et dans laquelle la prise de remplissage ouvre deux clapets internes du raccord de remplissage.

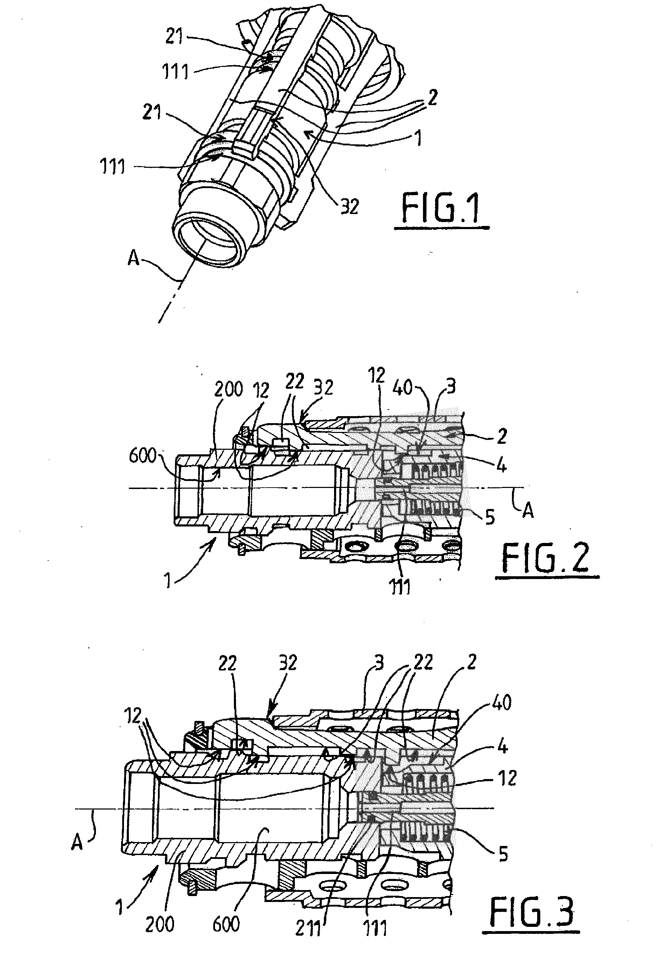

La prise de conditionnement représentée à la figure 1 comprend trois griffes 2 s'étendant selon une direction longitudinale autour d'un axe A longitudinal. Les griffes 2 délimitent un espace central situé autour l'axe A longitudinal formant un logement destiné à accueillir un raccord 1 de remplissage de forme générale cylindrique (cf. figure 1).

Dans l'exemple décrit, la prise de remplissage comporte trois griffes 2 réparties autour de l'axe 2 mais, bien entendu, il est possible d'envisager une prise comprenant une, deux ou plus de trois griffes 2.

Les griffes 2 sont par exemple réparties de façon symétrique autour de l'axe A (à 120° l'une de l'autre).

La face interne des griffes 2 (c'est-à-dire la face des griffes 2 tournée vers l'espace central et l'axe A) et de préférence plane et comprend des reliefs 12 et des creux 22 de dimensions déterminées (dimensions déterminées transversalement et perpendiculairement à l'axe A).

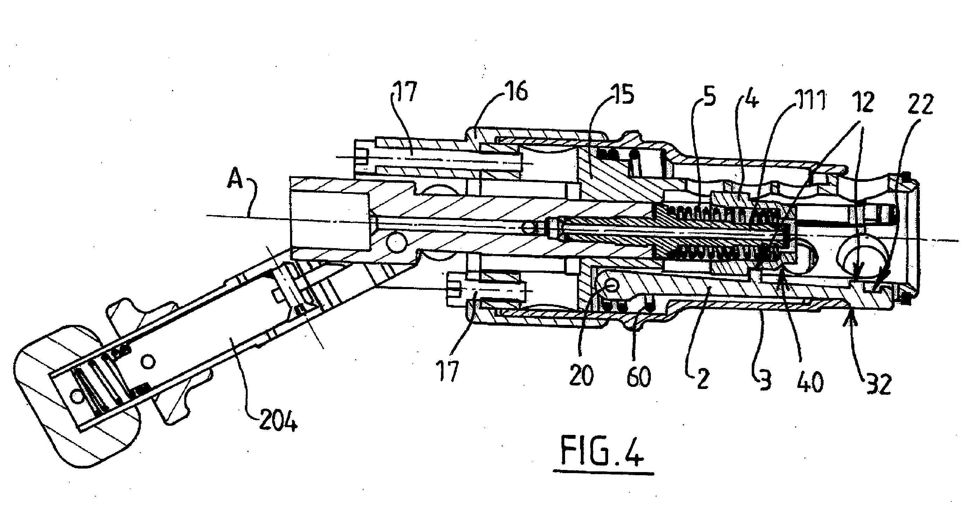

De plus, les reliefs 12 et creux 22 sont espacés longitudinalement relativement les uns des autres de façon déterminée pour s'emboîter dans des rainures 11 et reliefs 21 de formes conjuguées situés sur la face extérieure d'un raccord 1 de remplissage (cf. figure 1 et figure 4). C'est-à-dire que les reliefs 12 et creux 22 ont des emplacements déterminées selon une direction parallèle à l'axe A lorsque les griffes sont parallèles à cet axe A.

De cette façon, la prise est complémentaire d'une géométrie déterminée de raccord limitant la connexion à un type déterminé de raccord, pour ne permettre une connexion mécanique que pour des applications compatibles (pour assurer par exemple une compatibilité du type de gaz et de la pression de remplissage).

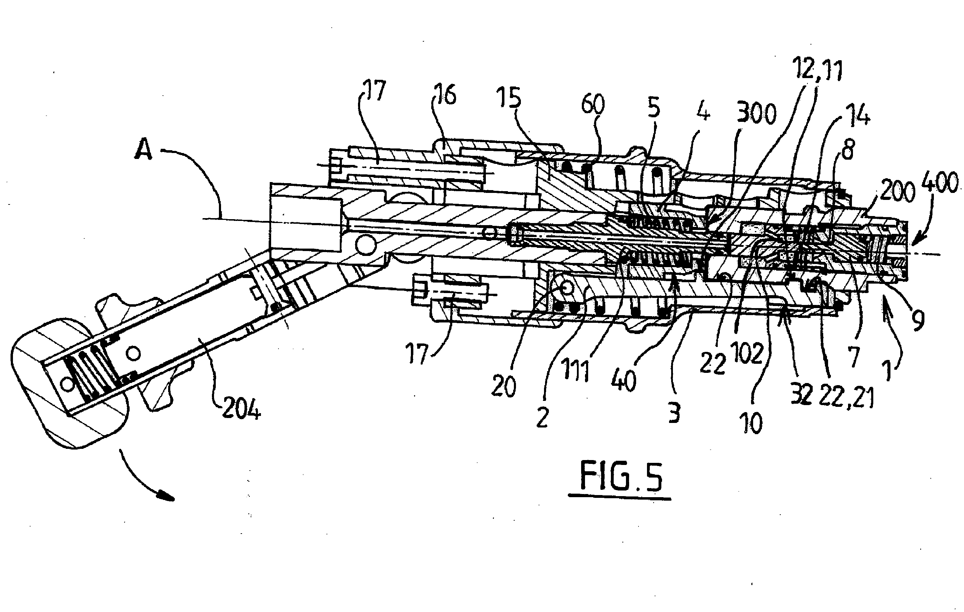

Au moins une et de préférence toutes les griffes 2 sont mobile transversalement par rapport à l'axe A longitudinal entre une position dite « écartée » pour permettre l'introduction d'un raccord 1 dans l'espace central (cf. figure 2) et une position dite « rapprochée » pour permettre l'emboîtement de la face interne des griffes 2 sur la face extérieure d'un raccord 1 (cf. figure 5).

Par exemple, la ou les griffes 2 sont mobiles entre les positions écartée et rapprochée via un mouvement de pivotement autour d'un axe 20 d'articulation. Comme représenté à la figure 1, l'axe d'articulation des griffes 2 est située à une extrémité dite « amont » de la griffe 2, c'est-à-dire à une extrémité de la griffe 2 située du côté amont de la prise dans le sens d'écoulement du gaz de remplissage dans la prise d'amont vers l'aval (lorsque la prise alimente un raccord de remplissage).

Bien entendu, en variante ou en combinaison il est possible d'envisager que le mouvement des griffes 2 entre les positions écartée et rapprochée soit obtenu via une flexion et/ou une translation des griffes 2.

La prise comprend également un organe 3 de verrouillage mobile entre une position active bloquant les griffes 2 en position rapprochée et une position inactive autorisant le déplacement des griffes 2 vers la position écartée.

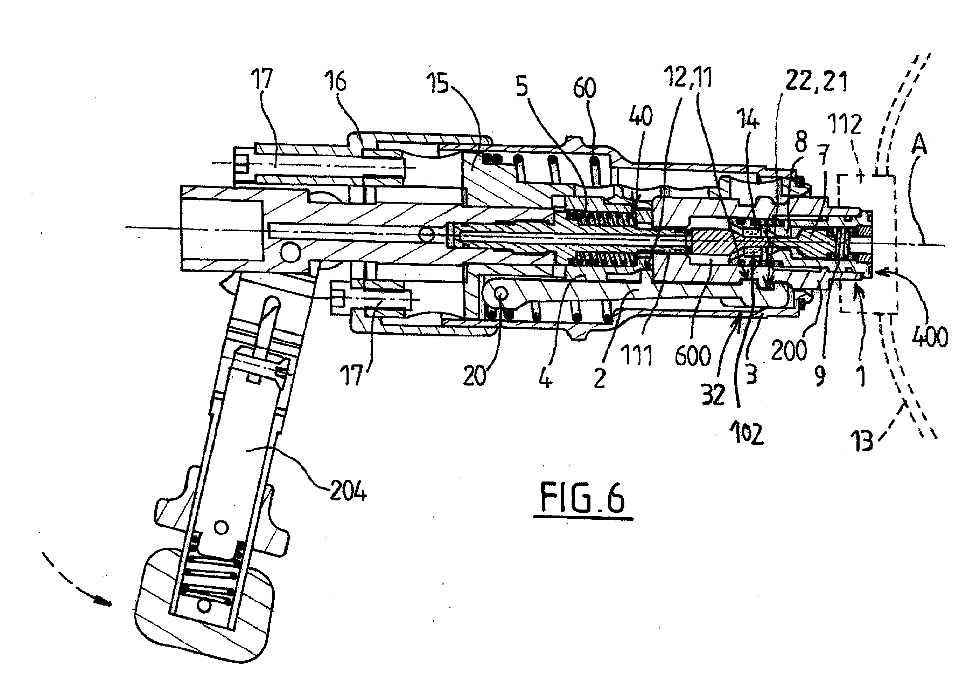

Comme représenté, l'organe 3 de verrouillage peut comprendre un manchon 3 de forme général tubulaire disposé autour des griffes 2. Le manchon 3 est sélectivement mobile en translation par rapport aux griffes 2 selon une direction parallèle à l'axe longitudinal A entre les positions inactive (en amont cf. figures 2, 3 et 4) et active (en aval cf. figure 5 et 6).

Comme visible aux figures 4 et 5, l'extrémité amont du manchon 3 peut être montée coulissante entre un socle 15 intérieur et un carter 16 extérieur. Par exemple, le socle 15 est monté sur le carter 16 via un ou des organes de fixation tels que des vis 17. Le socle 15 est par exemple de forme général tubulaire et abrite en sont sein un pousse-clapet 111, de préférence mobile.

En position active (vers l'aval) le manchon 3 vient enserrer les griffes 2 en position rapprochée. C'est-à-dire que, en position aval, le manchon 3 forme une butée mécanique bloquant l'écartement des griffes 2. En position inactive (vers l'amont de la prise, cf. figures 2, 3 et 4), le manchon 3 autorise un débattement des griffes 2 vers la position écartée.

Par exemple, l'extrémité aval de la face extérieure des griffes 2 comprend un épaulement formant une butée 32 destinée à coopérer avec le manchon pour définir les positions active et inactive du manchon 3. De plus, ces butées 32 peuvent empêcher ou autoriser sélectivement le passage du manchon 3 de la position inactive vers la position active. En position rapprochée des griffes 2, le passage du manchon 3 de la position inactive vers la position active (coulissement de l'amont vers l'aval) n'est pas entravé par la butée 32.

Le manchon 3 est de préférence est sollicité par défaut vers sa position active (vers l'aval) par un organe 60 de rappel tel qu'un ressort de compression.

Par exemple, l'extrémité amont du ressort 60 prend appui sur le socle 15.

La prise peut comprendre également de préférence un organe 4 mobile d'écartement sélectif des griffes 2. Cet organe 4 d'écartement a par exemple une forme tubulaire est monté dans le socle 15, autour du pousse-clapet 111 mobile. L'organe 4 d'écartement est de préférence mobile en translation selon l'axe A longitudinal. Cet organe 4 d'écartement est mobile entre une position dite « de travail » empêchant le déplacement des griffes 2 de la position écartée vers la position rapprochée et une position dite « de repos » autorisant le déplacement des griffes 2 de la position écartée vers la position rapprochée.

L'organe 4 d'écartement comprend une surface extérieure formant une butée sélective empêchant ou autorisant le rapprochement des griffes 2 en fonction de la position longitudinale de l'organe 4 d'écartement par rapport aux griffes 2.

Par exemple, et comme visible aux figures 2 à 5, l'organe 4 d'écartement comporte un corps de forme générale tubulaire dont la surface extérieure comporte un profil 40 en rampe qui guide au moins une griffe 2. Par exemple un relief 12 de la face interne d'au moins une griffe 2 est guidé au contact du profil 40 de rampe. Le profil 40 de rampe définit ainsi l'écartement de ladite au moins une griffe 2 par rapport à l'axe A longitudinal.

L'organe 4 d'écartement est de préférence sollicité par défaut vers sa position de travail (aval) par un organe 5 de rappel tel qu'un ressort de compression. Le ressort 5 de l'organe 4 d'écartement est par exemple monté autour du pousse-clapet 111 et prend appui sur ce dernier.

Un exemple de connexion d'une telle prise de remplissage sur un raccord 1 de remplissage va à présent être décrit.

La figure 4 illustre une prise de conditionnement en position déconnectée. Les griffes 2 sont en position relativement écartée. Le manchon 3 de verrouillage est bloqué par les griffes 2 en position inactive (amont). L'organe 4 d'écartement est en position de travail (amont).

Lorsque la prise de remplissage est enfilée sur un raccord 1 de remplissage selon l'axe longitudinal (de la droite vers la gauche à la figure 2), les griffes 2 s'écartent le cas échéant pour permettre l'insertion du raccord 1 dans l'espace central de la prise de remplissage. L'extrémité du raccord 1 vient alors en contact avec l'extrémité de l'organe 4 d'écartement. L'extrémité du raccord 1 pousse alors l'organe 4 d'écartement vers l'amont de la prise de remplissage contre l'effort du ressort 5. Le mouvement de recul (vers l'amont de la prise) de l'organe 4 d'écartement permet aux griffes 2 de se rapprocher de l'axe A longitudinal (via le profil 40 de rampe). Les reliefs 12 et creux 22 des griffes 2 viennent s'engager dans les creux 11 et reliefs 21 de la surface extérieure du raccord 1 (cf. figure 3 puis figure 5)

Les griffes 2 pivotent et se rabattent sur le raccord 1. Cet accrochage n'est possible qu'en cas de bonne complémentarité géométrique entre les griffes 2 et le profil extérieur du raccord 1.

De préférence, les rainures 11 et/ou reliefs 21 transversaux sont formés sur toute la circonférence du corps du raccord 1. De cette façon, les griffes 2 peuvent venir s'accrocher sur le corps du raccord 1 quelle que soit la position angulaire des griffes 2 (et de la prise de conditionnement) autour de l'axe longitudinal du raccord 1.

Le rapprochement des griffes 2 permet au manchon 3 de coulisser (via son ressort 60) automatiquement vers aval au dessus des griffes (cf. figure 5) pour empêcher que les griffes 2 ne s'écartent.

De cette façon, un déverrouillage est empêché, la prise est maintenue accrochée sur le raccord 1. Pour assurer une déconnexion, le manchon 3 doit au préalable être déplacé en position inactive (vers l'amont) afin de permettre l'écartement des griffes 2. Ce déplacement du manchon en position inactive est réalisé manuellement et/ou automatiquement.

De préférence, la prise de conditionnement peut comprendre un système de sécurité supplémentaire (non représenté) qui permet d'empêcher le déverrouillage (déplacement du manchon 3 vers l'amont) lorsque la prise est sous pression (c'est-à-dire lorsqu'elle délivre du gaz).

Lorsque l'accrochage mécanique est réalisé (cf. figure 5), la prise de remplissage peut commander l'ouverture de clapet(s) interne au raccord 1 pour délivrer du gaz sous pression.

De préférence, l'accrochage (mécanique) de la prise sur le raccord 1 est indépendant de l'ouverture des clapets du raccord et du passage du gaz.

Par exemple, la prise de remplissage comporte un pousse-clapet 111 mobile en translation soit par actionnement électromécanique et/ou hydraulique et/ou pneumatique et/ou via un levier 204 de commande manuel ou automatique.

Le levier 204 est par exemple pivotant et transforme par exemple un mouvement de rotation en un déplacement sélectif du pousse-clapet 111 selon l'axe A longitudinal (cf. figures 5 et 6).

Comme représenté de façon non limitative, le pousse-clapet 111 peut être tubulaire (le gaz sous pression de remplissage transitant via son canal interne). L'extrémité aval du pousse-clapet 111 peut comporter un système d'étanchéité pour se raccorder de façon étanche dans l'orifice du raccord 1 de remplissage (c'est-à-dire à l'intérieur du raccord).

Dans un mode de réalisation préféré mais non limitatif représenté aux figures 5 et 6, le raccord 1 de remplissage comprend un corps 200 définissant un circuit 600 interne de remplissage entre une extrémité amont 300 de connexion à la prise de conditionnement et une extrémité aval 400 de liaison avec un récipient 13 (cf. figure 6). Le raccord 1 est de préférence monté sur un robinet 112 avec ou sans détendeur de pression.

Le raccord 1 comprend un clapet 7 d'isolement mobile relativement à un siège 8 entre une position amont de fermeture du circuit et une position aval d'ouverture du circuit. Le clapet 7 d'isolement est sollicité par défaut vers sa position amont par un organe 9 de rappel tel qu'un ressort de compression.

Le raccord 1 comprend en outre un clapet 10 pare-poussière disposé en amont du clapet 7 d'isolement. Le clapet 10 pare-poussière est mobile relativement au corps 2 entre une position amont de fermeture de l'extrémité amont 3 du circuit 6 et une position aval d'ouverture de l'extrémité amont 3 circuit.

Le clapet 10 pare-poussière est sollicité vers sa position amont par un organe 14 de rappel tel qu'un ressort de compression.

De préférence, sans pour autant que ce soit limitatif, le clapet 10 pare-poussière peut porter un filtre 102 interposé sur le trajet d'au moins une partie du fluide qui transite entre l'amont 3 et l'aval 4 du circuit 6, le filtre 102 étant mobile avec le clapet 10 pare-poussière.

Le filtre (ou les filtres le cas échéant) ont par exemple une structure métallique ou autre pour retenir des particules solides, par exemple de dimensions supérieures à 0,05mm ou supérieures à 0,1 mm ou supérieures à 1 mm ou supérieures à 2mm (selon les besoins).

Selon une particularité avantageuse, le clapet 10 pare-poussière comporte une extrémité aval et, lorsque ledit clapet 10 pare-poussière est dans une position aval déterminée dite « de contact » ouvrant l'extrémité amont 3 du circuit 6, cette extrémité aval du clapet 10 pare-poussière vient pousser une extrémité amont du clapet 7 d'isolement mobile pour déplacer le clapet 7 d'isolement vers sa position aval d'ouverture du circuit.

Comme représenté, clapet 10 pare-poussière (et son filtre 102) peut être déplacé vers l'aval par le contact mécanique du pousse-clapet 111 (en variante du gaz sous pression issu de la prise de remplissage peut assurer ce déplacement du clapet 10 vers l'aval).

De cette façon, le clapet 10 pare-poussière amont peut former un actionneur pour le clapet 7 d'isolation aval. C'est-à-dire que le clapet 10 pare-poussière peut transmettre indirectement l'effort produit par la prise de remplissage au clapet 7 d'isolation aval. Bien entendu, en variante ce clapet 7 d'isolation aval peut également être déplacé par une pression de gaz délivré par la prise de remplissage.

En variante, le clapet 7 d'isolation peut comporter un mécanisme anti-retour (« NRV ») ne permettant l'ouverture du clapet 7 d'isolation que par contact mécanique (via le clapet 10 pare-poussière).

On conçoit donc que tout en étant de structure simple, l'invention propose un système de connexion entre une prise de remplissage et son raccord de grande sécurité.

Le système de complémentarité géométrique entre la prise de conditionnement et le raccord (la ou les rainures et reliefs du raccord et des griffes 2 de la prise) permet d'empêcher que la prise de conditionnement ne soit raccordée par erreur un raccord d'un récipient inadapté à la prise de remplissage (fluide ou conditions de remplissages inadaptés).

Ce système de connexion exclusif permet de prévoir une multitude de couples de géométries de raccords et prises de remplissage voisins mais distincts.

Par exemple, en prévoyant deux rainures 11 et deux reliefs 21 sur le raccord 1 dans des positions différentes décalées longitudinalement, il est possible de prévoir une multitude d'empreintes distinctes (par exemple plus de trente).

Ce système permet ainsi d'accroître la sécurité lors du remplissage des bouteilles correspondantes (en évitant par exemple de connecter une bouteille contenant du comburant sur une prise de remplissage délivrant du combustible).

La structure selon l'invention permet en outre de mettre en place des procédures de remplissage particulièrement efficaces en terme de sécurité pour les opérateurs assurant le remplissage et pour les utilisateurs finaux du robinet et de la bouteille de gaz équipés d'un tel raccord.

Ainsi, par exemple, en se référant à la figure 5, le clapet 10 pare-poussière mobile peut adopter, au cours de son déplacement, aux moins deux positions d'étanchéité permettant de sécuriser le remplissage.

Dans une première position d'étanchéité, le clapet 10 pare-poussière est déplacé vers l'aval et ouvre l'entrée amont 300 du raccord sans que le clapet 7 d'isolement ne soit ouvert (cf. figure 5). Dans cette position d'ouverture du clapet 10 amont et de fermeture du clapet 7 aval, la chambre située en amont du clapet 7 d'isolement peut être mise sous vide (pression basse déterminée) par exemple par un outil de remplissage pour réaliser des tests préalables au remplissage. Dans cette configuration il est en effet possible de mesurer d'éventuelles fuites provenant du clapet 7 d'isolation.

Dans une autre position d'étanchéité (cf. figure 6) le clapet 7 d'isolement peut être également ouvert pour assurer un remplissage et/ou pour réaliser une éventuelle purge du circuit du raccord et de la bouteille avant le remplissage.

En fin de remplissage, le clapet d'isolement 7 peut être refermé et le clapet 10 pare-poussière peut être maintenu ouvert (cf. figure 5) pour réaliser d'éventuels tests d'étanchéité de fin de remplissage comme ceux décrits ci-dessus préalablement au remplissage.

Indépendamment de la présence d'un filtre mobile sur un clapet 10 pare-poussière (le filtre peut être omis), le procédé de remplissage selon l'invention permet ainsi d'améliorer la sécurité du remplissage via l'actionnement du mécanisme de double clapets en série décrit ci-dessus.

Le raccord de remplissage peut le cas échéant également être le raccord de soutirage du gaz.

Le mécanisme décrit ci-dessus permet notamment automatisation du remplissage, en particulier lorsque la connexion ne nécessite pas d'indexage angulaire entre le raccord de remplissage et la prise de conditionnement.

## Revendications

1. Prise de conditionnement prévue pour coopérer avec un raccord (1) de remplissage d'un robinet de récipient de fluide sous pression, comprenant une base (15, 16) et au moins une griffe (2) s'étendant selon une direction longitudinale autour d'un axe (A) longitudinal, l'espace central situé entre la ou les griffes (2) et l'axe (A) longitudinal formant un logement destiné à accueillir un raccord (1) de remplissage de forme générale cylindrique, la face interne de la au moins une griffe (2) située en vis-à-vis de l'espace central étant de forme générale plane, la au moins une griffe (2) étant mobile par rapport à la base (15, 16) transversalement par rapport à l'axe (A) longitudinal entre une position dite « écartée » pour permettre l'introduction d'un raccord (1) dans l'espace central et une position dite « rapprochée » pour permettre l'emboîtement de la face interne des griffes (2) sur la face extérieure d'un raccord (1), ladite prise comprenant un organe (3) de verrouillage mobile par rapport à la base (15, 16) et par rapport à la au moins une griffe (2) entre une position active bloquant les griffes (2) en position rapprochée et une position inactive autorisant le déplacement des griffes (2) vers la position écartée, l'organe (3) de verrouillage étant sollicité par défaut vers sa position active par un organe (60) de rappel, et la prise comprenant un pousse-clapet (111) sélectivement mobile dans l'espace central pour actionner l'ouverture d'au moins un clapet interne d'un raccord (1) de remplissage, **caractérisée en ce que** le face interne de la griffe est munie de reliefs (12) et/ou de creux (22) de dimensions déterminées, les reliefs (12) et/ou creux (22) étant espacés relativement les uns des autres de façon déterminée pour s'emboîter dans des rainures (11) et/ou reliefs (21) conjugués formés sur la face extérieure d'un raccord (1) de remplissage, et **en ce que** le pousse-clapet (111) de la prise est mobile en translation indépendamment de la position de la au moins une griffe (2) et de la position de l'organe (3) de verrouillage.

2. Prise de conditionnement selon la revendication 1 **caractérisée en ce qu'**elle comprend plusieurs griffes (2) espacées les unes des autres autour de l'axe (A) longitudinal.

3. Prise de conditionnement selon la revendication 1 ou 2, **caractérisée en ce qu'**elle comporte au moins une griffe (2) mobile entre les positions écartée et rapprochée via un mouvement de pivotement autour d'un axe (20) d'articulation.

4. Prise de conditionnement selon l'une quelconque des revendications 1 à 3, **caractérisée en ce que** l'organe de verrouillage comprend un manchon (3) de forme général tubulaire disposé autour de la au moins une griffe (2).

5. Prise de conditionnement selon la revendication 4, **caractérisée en ce que** le manchon (3) est mobile en translation selon une direction parallèle à l'axe longitudinal (A).

6. Prise de conditionnement selon l'une quelconque des revendications 1 à 5, **caractérisée en ce que**, lorsque la au moins une griffe (2) est en position écartée, une butée (32) empêche le passage de l'organe (3) de verrouillage de la position inactive vers la position active, et **en ce que**, lorsque la au moins une griffe (2) est en position rapprochée, le passage de l'organe (3) de verrouillage de la position inactive vers la position active n'est pas entravé par la butée (32).

7. Prise de conditionnement selon l'une quelconque des revendications 1 à 6, **caractérisée en ce qu'**elle comprend un organe (4) mobile d'écartement sélectif des griffes, ledit organe (4) d'écartement étant mobile entre une position dite « de travail » empêchant le déplacement des griffes (2) de la position écartée vers la position rapprochée et une position dite « de repos » autorisant le déplacement des griffes (2) de la position écartée vers la position rapprochée.

8. Prise de conditionnement selon la revendication 7, **caractérisée en ce que** l'organe (4) d'écartement est sollicité par défaut vers sa position de travail par un organe (5) de rappel.

9. Prise de conditionnement selon la revendication 7 ou 8, **caractérisée en ce que** l'organe (4) d'écartement débouche dans l'espace central situé entre la au moins une griffe (2) et l'axe (A) longitudinal, et **en ce que** l'organe (4) d'écartement est déplaçable de sa position de travail vers sa position de repos par actionnement mécanique direct ou indirect du raccord (1) de remplissage lorsque ce dernier pénètre dans l'espace central de la prise de conditionnement.

10. Prise selon l'une quelconque des revendications 1 à 9, **caractérisée en ce qu'**elle comprend au moins une griffe (2) mobile entre les positions écartée et rapprochée via un mouvement de flexion et/ou de pivotement autour d'un axe (20) d'articulation fixe relativement à la base (15, 16) située à une extrémité dite « amont » de la griffe (2), c'est-à-dire que l'axe (20) d'articulation est situé à une extrémité de la griffe (2) qui est du côté amont de la prise dans le sens d'écoulement du gaz de remplissage dans la prise.

11. Prise selon l'une quelconque des revendications 1 à 10, **caractérisée en ce qu'**elle comprend trois ou quatre griffes (2) disposées autour de l'axe longitudinal.

12. Ensemble comprenant un raccord (1) de remplissage et une prise de conditionnement, **caractérisé en ce que** la prise de conditionnement est conforme à l'une quelconque des revendications 1 à 11 et **en ce que** le raccord (1) de remplissage comprend un corps de forme générale cylindrique s'étendant selon un axe longitudinal et dont la surface extérieure comprend des rainures (11) et/ou reliefs (21) transversaux ayant des dimensions déterminées selon une direction perpendiculaire à l'axe longitudinal du raccord (1), les rainures et/ou reliefs (21) étant espacés de façon déterminée selon la direction longitudinale du raccord (1) et **en ce que** les reliefs (12) et/ou creux (22) de la au moins une griffe (2) sont conjuguées desdits rainures et/ou reliefs (21) du raccord (1) pour permettre un accrochage sélectif des griffes (2) sur le corps du raccord (1).

13. Ensemble selon la revendication 12, **caractérisé en ce qu'**au moins une partie des rainures (11) et/ou reliefs (21) transversaux sont formés sur la circonférence du corps du raccord (1) pour permettre un accrochage de la au moins une griffe (2) sur le corps du raccord (1) quelle que soit la position angulaire de la au moins une griffe (2) autour de l'axe A longitudinal du raccord (1).

14. Utilisation d'une prise de conditionnement selon l'une quelconque des revendications 1 à 11 ou d'un ensemble selon l'une quelconque des revendications 12 ou 13 pour le remplissage d'un récipient de fluide sous pression, notamment une bouteille de gaz sous pression.

15. Procédé de remplissage en fluide sous pression d'un récipient (13) comprenant un robinet (112) muni d'un raccord (1) de remplissage ayant un corps de forme générale cylindrique s'étendant selon un axe longitudinal et dont la surface extérieure comprend des rainures (11) et/ou reliefs (21) transversaux ayant des dimensions déterminées selon une direction perpendiculaire à l'axe longitudinal du raccord (1), le raccord (1) comprenant un moins un clapet (7, 10) interne, **caractérisé en ce que** le procédé comporte une étape de connexion mécanique, sur le raccord (1), d'une prise de conditionnement selon l'une quelconque des revendications 1 à 11, la face interne de la au moins une griffe (2) de la prise de conditionnement étant conjuguée de la forme extérieur du raccord (1).

## Patentansprüche

1. Konditionierungsanschluss für das Zusammenwirken mit einem Füllstutzen (1) eines Hahns eines unter Druck stehenden Fluidbehälters, umfassend eine Basis (15, 16) und mindestens eine Klaue (2), die sich in einer Längsrichtung um eine Längsachse (A) erstreckt, wobei der zentrale Raum, der sich zwischen der oder den Klauen (2) und der Längsachse (A) befindet, einen Sitz für die Aufnahme eines Füllstutzens (1) allgemein zylindrischer Form bildet, wobei die Innenseite der mindestens einen Klaue (2), die sich dem zentralen Raum gegenüber befindet, eine allgemein ebene Form hat, wobei die mindestens eine Klaue (2) relativ zur Basis (15, 16) in Querrichtung relativ zur Längsachse (A) beweglich ist zwischen einer so genannten "beabstandeten" Stellung, um das Einführen eines Stutzens (1) in den zentralen Raum zu ermöglichen, und einer so genannten "herangeführten" Stellung, um den Eingriff der Innenseite der Klauen (2) an der Außenseite eines Stutzens (1) zu ermöglichen, wobei der Anschluss ein Verriegelungsorgan (3) umfasst, das relativ zur Basis (15, 16) und relativ zu der mindestens einen Klaue (2) beweglich ist zwischen einer aktiven Stellung, welche die Klauen (2) in herangeführter Stellung blockiert, und einer inaktiven Stellung, welche die Bewegung der Klauen (2) in die beabstandete Stellung gestattet,
wobei das Verriegelungsorgan (3) standardmäßig in Richtung seiner aktiven Stellung durch ein Rückstellorgan (60) in Anspruch genommen wird, und wobei der Anschluss einen Klappenantrieb (111) umfasst, der in dem zentralen Raum selektiv beweglich ist, um das Öffnen mindestens eines inneren Ventils eines Füllstutzens (1) zu bewirken,
**dadurch gekennzeichnet, dass** die Innenseite der Klaue mit Erhöhungen (12) und/oder Vertiefungen (22) bestimmter Abmessungen versehen ist, wobei die Erhöhungen (12) und/oder Vertiefungen (22) auf bestimmte Weise relativ zueinander beabstandet sind, um mit angepassten Nuten (11) und/oder Erhöhungen (21) in Eingriff zu kommen, die an der Außenseite eines Füllstutzens (1) gebildet sind, und dass der Klappenantrieb (111) des Anschlusses unabhängig von der Stellung der mindestens einen Klaue (2) und von der Stellung des Verriegelungsorgans (3) in Translation beweglich ist.

2. Konditionierungsanschluss nach Anspruch 1, **dadurch gekennzeichnet, dass** er mehrere Klauen (2) umfasst, die um die Längsachse (A) voneinander beabstandet sind.

3. Konditionierungsanschluss nach Anspruch 1 oder 2, **dadurch gekennzeichnet, dass** er mindestens eine Klaue (2) aufweist, die zwischen der beabstandeten und der herangeführten Stellung über eine Schwenkbewegung um eine Gelenkachse (20) beweglich ist.

4. Konditionierungsanschluss nach einem der Ansprüche 1 bis 3, **dadurch gekennzeichnet, dass** das Verriegelungsorgan eine allgemein rohrförmige Hülse (3) umfasst, die um die mindestens eine Klaue (2) angeordnet ist.

5. Konditionierungsanschluss nach Anspruch 4, **dadurch gekennzeichnet, dass** die Hülse (3) in einer zu der Längsachse (A) parallelen Richtung in Translation beweglich ist.

6. Konditionierungsanschluss nach einem der Ansprüche 1 bis 5, **dadurch gekennzeichnet, dass**, wenn die mindestens eine Klaue (2) in der beabstandeten Stellung ist, ein Anschlag (32) den Übergang des Verriegelungsorgans (3) aus der inaktiven Stellung in die aktive Stellung verhindert, und dass, wenn die mindestens eine Klaue (2) in der herangeführten Stellung ist, der Übergang des Verriegelungsorgans (3) aus der inaktiven Stellung in die aktive Stellung durch den Anschlag (32) nicht behindert wird.

7. Konditionierungsanschluss nach einem der Ansprüche 1 bis 6, **dadurch gekennzeichnet, dass** er ein bewegliches Organ (4) zum selektiven Beabstanden der Klauen umfasst, wobei das Beabstandungsorgan (4) beweglich ist zwischen einer so genannten "Arbeitsstellung", welche die Bewegung der Klauen (2) aus der beabstandeten Stellung in die herangeführte Stellung verhindert, und einer so genannten "Ruhestellung", welche die Bewegung der Klauen (2) aus der beabstandeten Stellung in die herangeführte Stellung gestattet.

8. Konditionierungsanschluss nach Anspruch 7, **dadurch gekennzeichnet, dass** das Beabstandungsorgan (4) standardmäßig in Richtung seiner Arbeitsstellung durch ein Rückstellorgan (5) in Anspruch genommen wird.

9. Konditionierungsanschluss nach Anspruch 7 oder 8, **dadurch gekennzeichnet, dass** das Beabstandungsorgan (4) in den zentralen Raum mündet, der sich zwischen der mindestens einen Klaue (2) und der Längsachse (A) befindet, und dass das Beabstandungsorgan (4) aus seiner Arbeitsstellung in seine Ruhestellung bewegbar ist durch direkte oder indirekte mechanische Betätigung des Füllstutzens (1), wenn dieser in den zentralen Raum des Konditionierungsanschlusses eindringt.

10. Anschluss nach einem der Ansprüche 1 bis 9, **dadurch gekennzeichnet, dass** er mindestens eine Klaue (2) umfasst, die beweglich ist zwischen der beabstandeten und der herangeführten Stellung über eine Biege- und/oder Schwenkbewegung um eine relativ zur Basis (15, 16) feststehende Gelenkachse (20), die sich an einem so genannten "stromaufwärtigen" Ende der Klaue (2) befindet, das heißt, die Gelenkachse (20) befindet sich an einem Ende der Klaue (2), das sich in der Fließrichtung des Füllgases in dem Stutzen auf der stromaufwärtigen Seite des Anschlusses befindet.

11. Anschluss nach einem der Ansprüche 1 bis 10, **dadurch gekennzeichnet, dass** er drei oder vier Klauen (2) umfasst, die um die Längsachse angeordnet sind.

12. Anordnung umfassend einen Füllstutzen (1) und einen Konditionierungsanschluss, **dadurch gekennzeichnet, dass** der Konditionierungsanschluss einem der Ansprüche 1 bis 11 entspricht und dass der Füllstutzen (1) einen Körper allgemein zylindrischer Form umfasst, der sich entlang der Längsachse erstreckt und dessen Außenfläche quergerichtete Nuten (11) und/oder Erhöhungen (21) mit Abmessungen umfasst, die gemäß einer zur Längsachse des Stutzens (1) senkrechten Richtung bestimmt sind, wobei die Nuten und/oder Erhöhungen (21) in der Längsrichtung des Stutzens (1) auf bestimmte Weise beabstandet sind, und dass die Erhöhungen (12) und/oder Vertiefungen (22) der mindestens einen Klaue (2) an die Nuten und/oder Erhöhungen (21) des Stutzens (1) angepasst sind, um ein selektives Einhängen der Klauen (2) am Körper des Stutzens (1) zu ermöglichen.

13. Anordnung nach Anspruch 12, **dadurch gekennzeichnet, dass** mindestens ein Teil der quergerichteten Nuten (11) und/oder Erhöhungen (21) am Umfang des Körpers des Stutzens (1) gebildet ist, um ein Einhängen der mindestens einen Klaue (2) am Körper des Stutzens (1) unabhängig von der Winkelposition der mindestens einen Klaue (2) um die Längsachse (A) des Stutzens (1) zu ermöglichen.

14. Verwendung eines Konditionierungsanschlusses nach einem der Ansprüche 1 bis 11 oder einer Anordnung nach einem der Ansprüche 12 oder 13 zum Befüllen eines unter Druck stehenden Fluidbehälters, insbesondere einer Druckgasflasche.

15. Verfahren zum Befüllen eines Behälters (13) mit einem unter Druck stehenden Fluid, umfassend einen Hahn (112), der mit einem Füllstutzen (1) versehen ist, der einen Körper allgemein zylindrischer Form aufweist, der sich entlang einer Längsachse erstreckt und dessen Außenfläche quergerichtete Nuten (11) und/oder Erhöhungen (21) mit Abmessungen umfasst, die in einer zur Längsachse des Stutzens (1) senkrechten Richtung bestimmt sind, wobei der Stutzen (1) mindestens ein inneres Ventil (7, 10) umfasst, **dadurch gekennzeichnet, dass** das Verfahren einen Schritt der mechanischen Verbindung an dem Stutzen (1) eines Konditionierungsanschlusses nach einem der Ansprüche 1 bis 11 aufweist, wobei die Innenseite der mindestens einen Klaue (2) des Konditionierungsanschlusses an die äußere Form des Stutzens (1) angepasst ist.

## Claims

1. Conditioning outlet designed to cooperate with a filling connector (1) of a pressurised fluid container tap, comprising a base (15, 16) and at least one claw (2) extending in a longitudinal direction about a longitudinal axis (A), the central space located between the one or more claws (2) and the longitudinal axis (A) forming a recess designed to receive a filling connector (1) of generally cylindrical shape, the internal face of the at least one claw (2) located facing the central space being of generally flat shape, the at least one claw (2) being movable relative to the base (15, 16), in a transverse manner relative to the longitudinal axis (A), between an "open" position to allow a connector (1) to be introduced into the central space and a "closed" position to allow the internal face of the claws (2) to fit onto the external face of a connector (1), said outlet comprising a locking member (3) that is movable relative to the base (15, 16) and relative to the at least one claw (2) between an active position locking the claws (2) in the closed position and an inactive position enabling the claws (2) to move to the open position, the locking member (3) being pushed by default towards its active position by a return member (60), and the outlet comprising a valve actuator (111) that can be selectively moved in said central space to activate the opening of at least one internal valve of a filling connector (1), **characterised in that** the internal face of the claw is provided with reliefs (12) and/or recesses (22) of determined dimensions, the reliefs (12) and/or recesses (22) being spaced apart relative to one another in a determined manner so as to fit into matching grooves (11) and/or reliefs (21) formed on the external face of a filling connector (1), and **in that** the valve actuator (111) of the outlet is movable in translation independently of the position of the at least one claw (2) and of the position of the locking member (3).

2. Conditioning outlet according to claim 1, **characterised in that** it comprises a plurality of claws (2) spaced apart from one another about the longitudinal axis (A).

3. Conditioning outlet according to either claim 1 or claim 2, **characterised in that** it comprises at least one claw (2) that is movable between the open and closed positions via a pivoting movement about a pivot pin (20).

4. Conditioning outlet according to any of claims 1 to 3, **characterised in that** the locking member comprises a sleeve (3) of generally tubular shape arranged about the at least one claw (2).

5. Conditioning outlet according to claim 4, **characterised in that** the sleeve (3) is movable in translation in a direction parallel to the longitudinal axis (A).

6. Conditioning outlet according to any of claims 1 to 5, **characterised in that**, when the at least one claw (2) is in the open position, a stop (32) prevents the locking member (3) from moving from the inactive position to the active position, and **in that**, when the at least one claw (2) is in the closed position, the movement of the locking member (3) from the inactive position to the active position is not prevented by the stop (32).

7. Conditioning outlet according to any of claims 1 to 6, **characterised in that** it comprises a movable member (4) for selectively opening the claws, said opening member (4) being movable between a "working" position preventing the claws (2) from being moved from the open position to the closed position and a "rest" position allowing the claws (2) to be moved from the open position to the closed position.

8. Conditioning outlet according to claim 7, **characterised in that** the opening member (4) is pushed by default towards its working position by a return member (5).

9. Conditioning outlet according to either claim 7 or claim 8, **characterised in that** the opening member (4) ends in the central space located between the at least one claw (2) and the longitudinal axis (A), and **in that** the opening member (4) can be moved from its working position to its rest position by directly or indirectly mechanically activating the filling connector (1) when said filling connector penetrates the central space of the conditioning outlet.

10. Outlet according to any of claims 1 to 9, **characterised in that** it comprises at least one claw (2) that can be moved between the open and closed positions via a bending and/or pivoting movement about a pivot pin (20) that is fixed relative to the base (15, 16) and is located at an "upstream" end of the claw (2), i.e. the pivot pin (20) is located at an end of the claw (2) that is on the upstream side of the outlet in the flow direction of the filling gas in the outlet.

11. Outlet according to any of claims 1 to 10, **characterised in that** it comprises three or four claws (2) arranged about the longitudinal axis.

12. Assembly comprising a filling connector (1) and a conditioning outlet, **characterised in that** the conditioning outlet is a conditioning outlet according to any of claims 1 to 11, and **in that** the filling connector (1) comprises a body of generally cylindrical shape extending along a longitudinal axis and the external surface of which comprises transverse grooves (11) and/or reliefs (21) of determined dimensions in a direction perpendicular to the longitudinal axis of the connector (1), the grooves and/or reliefs (21) being spaced in a determined manner in the longitudinal direction of the connector (1), and **in that** the reliefs (12) and/or recesses (22) of the at least one claw (2) match said grooves and/or reliefs (21) of the connector (1) to allow selective engagement of the claws (2) on the body of the connector (1).

13. Assembly according to claim 12, **characterised in that** at least part of the transverse grooves (11) and/or reliefs (21) is formed on the circumference of the body of the connector (1) to allow engagement of the at least one claw (2) with the body of the connector (1), regardless of the angular position of the at least one claw (2) about the longitudinal axis (A) of the connector (1).

14. Use of a conditioning outlet according to any of claims 1 to 11 or of an assembly according to either claim 12 or claim 13 for filling a pressurised fluid container, in particular a pressurised gas cylinder.

15. Method for filling a container (13) with pressurised fluid, said container comprising a tap (112) provided with a filling connector (1) having a body of generally cylindrical shape extending along a longitudinal axis and the external surface of which comprises transverse grooves (11) and/or reliefs (21) of determined dimensions in a direction perpendicular to the longitudinal axis of the connector (1), the connector (1) comprising at least one internal valve (7, 10), **characterised in that** the method comprises a step of mechanically connecting a conditioning outlet according to any of claims 1 to 11 to the connector (1), the internal face of the at least one claw (2) of the conditioning outlet being matched to the external shape of the connector (1).
